# EUROPÄISCHE PATENTSCHRIFT

(11) **EP 3 301 007 B1**
(45) Veröffentlichungstag und Bekanntmachung des Hinweises auf die Patenterteilung: **06.11.2019**
(21) Anmeldenummer: 17187476.1
(22) Anmeldetag: 23.08.2017
(51) Int. Cl.: B62M 6/45, B62M 6/50, B60L 50/20, G08G 1/16

(54) **VORRICHTUNG UND VERFAHREN ZUR ERKENNUNG EINES HINDERNISSES**
DEVICE AND METHOD FOR DETECTING AN OBSTACLE
DISPOSITIF ET PROCÉDÉ DE DÉTECTION D'UN OBSTACLE

(30) Priorität: 30.09.2016 DE 102016218967
(43) Veröffentlichungstag der Anmeldung: 04.04.2018
(73) Patentinhaber: Robert Bosch GmbH, 70442 Stuttgart (DE)
(72) Erfinder: Kimmich, Peter, 71144 Steinenbronn (DE); Baumgaertner, Daniel, 72070 Tuebingen (DE)

(56) Entgegenhaltungen:
- DE-A1-102009 054 756
- DE-A1-102015 111 984

## Beschreibung

Die Erfindung betrifft eine Vorrichtung sowie ein Verfahren zur Erkennung eines Hindernisses in Fahrtrichtung eines Fahrzeugs auf der voraus liegenden Fahrbahn.

### Stand der Technik

Nicht nur bei einer Nachtfahrt mit einem Fahrzeug, insbesondere mit einem Zweirad, stellen auf der Fahrbahn befindliche Hindernisse eine nicht zu unterschätzende Gefahr da. Werden auf der Fahrbahn liegende Äste oder Löcher in der Fahrbahn zu spät entdeckt, kann es schnell zu einem Sturz kommen.

Um eventuelle Gefahren durch Hindernisse um ein Fahrzeug anzuzeigen, sind Parkassistenten bekannt, bei denen mittels Kamera und/oder Radar- bzw. Ultraschallsensoren die Umgebung erfasst werden. Die so erfassten Informationen über die Umgebung können dann mittels eines Displays dem Fahrer angezeigt werden. Hierbei können die Hindernisse graphisch, beispielsweise durch Farben, oder auch akustisch hervorgehoben werden, um den Fahrer aufmerksam zu machen.

Aus der nicht vorveröffentlichten Schrift DE 10 2016 00683 A1 ist ein Verfahren zur Erkennung eines Hindernisses auf einer Fahrbahn in Fahrtrichtung eines Fahrzeugs bekannt. Hierbei wird in Abhängigkeit von dem erkannten Hindernis ein Beleuchtungsmittel angesteuert, welches das Hindernis beleuchtet.

Aus der nicht vorveröffentlichten Schrift DE 10 2016 213691 A1 ist ein Verfahren bekannt, bei dem mittels einer Umfeldsensorik ein Hindernis auf der Fahrbahn vor einem Fahrrad erkannt wird und der am Fahrrad befindliche Motor zur Überwindung des Hindernisses derart angesteuert wird, dass ein Anheben des Vorderrads erfolgt.

Aus der nicht vorveröffentlichten Schrift DE 10 2015 224 666 A1 ist ein Verfahren zur Identifizierung der Betätigungsseite einer Pedalanordnung eines Fahrrads bekannt. Dabei wird die Betätigungsseite in Abhängigkeit von der Erfassung einer Kraftgröße auf die Tretkurbelwelle und einer Verkippungsgröße identifiziert.

Aus der Schrift DE 102012220182 A1 ist eine Vorrichtung und ein Verfahren zur Steuerung des Motors eines Elektrofahrrads bekannt. Dabei wird die Neigung des Fahrrads erfasst, um die Pedalen während einer Kurvenfahrt in eine für eine Kurvenfahrt günstige Stellung zu bewegen.

### Offenbarung der Erfindung

Mit der vorliegenden Erfindung wird eine Vorrichtung entsprechend Anspruch 6 und ein Verfahren entsprechend Anspruch 1 beansprucht, bei dem ein Hindernis auf einer Fahrbahn in Fahrtrichtung eines zumindest teilweise mittels eines Motors angetriebenen Fahrrads befindet.

Dabei soll als Hindernis jedes Objekt erkannt werden, welches das Passieren der entsprechenden Stelle durch das Fahrrad behindert. So können als Hindernis sowohl Äste als auch ein Beschädigungen der Fahrbahn, beispielweise durch ein Schlagloch, erkannt werden. Das Erkennen des Hindernisses erfolgt dabei über die Erfassung der (vorausliegenden) Fahrbahn mittels der Daten einer Umfeldsensorik in Fahrtrichtung sowie wenigstens einer fahrdynamischen Größe, die den Betrieb des Fahrrads und somit die beabsichtigte Fahrroute des Fahrrads charakterisieren hilft. Hierdurch kann erkannt werden, ob sich auf der vom Fahrrad zu befahrenden Strecke auf der Fahrbahn ein Gegenstand befindet oder die Fahrbahn als solches beschädigt ist. Ausgehend von den Daten der Umfeldsensorik, z.B. einem Kamerasystem, einem LIDAR-System, Radar, Ultraschallsensoren oder ähnlichem, und der wenigstens einen fahrdynamischen Größe wird ein Ausweichmanöver abgeleitet, mittels dem das Hindernis umfahren werden kann. Zur Umfahrung des Hindernisses wird dabei der Motor des Fahrrads derart angesteuert, dass sich in der Zusammenwirkung mit der Pedalbetätigung durch den Fahrer und der Unterstützung durch den Motor eine Verkippung des Fahrrads ergibt, welche das Umfahren gemäß dem ermittelten Ausweichmanöver unterstützt.

Durch dieses Verfahren bzw. die zugehörige Vorrichtung wird demnach ein System beschrieben, welches das Ausweichen und das Umfahren eines Hindernisses auf der Fahrbahn unterstützt.

Zur Ansteuerung des Motors wird in einer Erweiterung die Betätigung der Pedalen erfasst. Hierbei kann neben der Betätigungsseite auch die (Tritt-)Stärke und der (Betätigungs-) Rhythmus erfasst werden, um eine Prognose zur Pedalbetätigung ableiten zu können. Diese Prognose kann bei der Ansteuerung des Motors dazu verwendet werden, im Betätigungszeitraum der Pedale auf der Seite des Fahrrads, auf dessen Seite das Ausweichmanöver um das Hindernis herum gefahren werden soll, das Motordrehmoment zu reduzieren oder sogar gänzlich auf null herunter zu fahren. Diese Reduzierung erzeugt ein höheres Trittdrehmoment durch den Fahrer, welches üblicherweise mit einer Verkippung des Fahrrads zu dieser Seite hin verbunden ist. Somit wird das Ausweichmanöver unterstützt.

Alternativ kann der Fahrer auch gewarnt werden, falls erkannt wird, dass aufgrund des Hindernisses und/oder der Fahrdynamik ein Ausweichen mittels des Ausweichmanövers um das Hindernis herum nicht möglich ist. Die Warnung kann dabei akustisch oder optisch auf einem Display vorgesehen sein. Auch die Ansteuerung des Motors in einen Vibrationsmodus kann vorgesehen sein, so dass der Fahrer haptisch mittels der Übertragung auf den Rahmen gewarnt werden kann. Statt einer Warnung oder auch zusätzlich kann ein automatischer Bremsvorgang eingeleitet werden.

Die vorliegenden Erfindung kann bei jeder Art von Zwei- oder Mehrrad angewandt werden, die wenigstens teilweise elektrisch und per Muskelkraft angetrieben werden kann.

Weitere Vorteile ergeben sich aus der nachfolgenden Beschreibung von Ausführungsbeispielen bzw. aus den abhängigen Patentansprüchen.

### Kurze Beschreibung der Zeichnungen

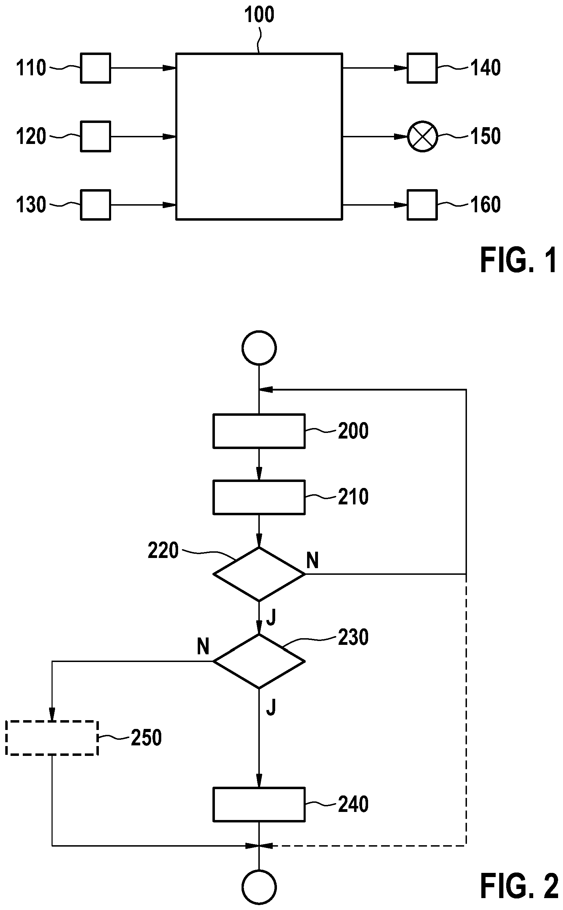

In der Figur 1 wird eine Vorrichtung dargestellt, in der ein erfindungsgemäßes Verfahren ablaufen kann. Mit dem Flussdiagramm der Figur 2 wird der Ablauf des erfindungsgemäßen Verfahrens schematisch beschrieben.

### Offenbarung der Erfindung

Mittels der Figur 1 wird die erfindungsgemäße Vorrichtung zur Erkennung eines Hindernisses und der Ansteuerung eines Motors zur Initiierung eines Ausweichmanövers schematisch anhand eines Blockschaltbilds dargestellt. Die Steuerung des Motors 140 wird dabei in einer Vorrichtung 100 durchgeführt, z.B. einer Steuereinheit 100. Hierzu werden von der Vorrichtung 100 zunächst die Daten einer Umfeldsensorik 110 eingelesen, die zumindest die dem Fahrrad vorausliegende Fahrbahn erfasst. Bei dieser Umfeldsensorik 110 kann es sich um jedwede geeignete Erfassungseinheit handeln, die Hindernisse auf der Fahrbahn eindeutig und zuverlässig erfassen lässt. Denkbar wäre hier beispielsweise ein Kamerasystem, ein Infrarotsensorsystem, ein LIDAR-System, allgemein ein Radarsystem, ein Ultraschallsystem oder ein Lasersystem. Zusätzlich wird wenigstens eine fahrdynamische Größe mittels eines geeigneten Sensors 120 erfasst, die die Bewegung des Fahrrads repräsentiert. Mittels der wenigstens einen fahrdynamischen Größe und dem erkannten Hindernis kann die Vorrichtung 100 ein mögliches Ausweichmanöver ermitteln, welches das Fahrrad auf eine Fahrstrecke um das Hindernis herum führt. Ausgehend von diesem ermittelten Ausweichmanöver bzw. der damit verbundenen Fahrstrecke kann der Motor 140 derart angesteuert werden, dass der Fahrer des Fahrrads auf diese Fahrstrecke geführt wird. Dies wird dadurch erreicht, dass durch das Ausweichmanöver erkannt wird, inwieweit eine Umfahren rechts oder links vor dem Hindernis möglich ist und die Motorunterstützung auf der Seite der Umfahrung reduziert oder sogar gänzlich eingestellt wird. Eine derartige Reduzierung bis kompletter Abschaltung resultiert in einem (unwillkürlichen) stärkeren Tritt des Fahrers in die Pedale auf dieser Seite, die (üblicherweise) mit einer Verkippung des Fahrrads verbunden ist. Somit wird das Fahrrad und damit auch der Fahrer auf diese Seite zum Ausweichen hin bewegt.

Optional kann vorgesehen sein, dass zur Ansteuerung des Motors 140 , insbesondere zur zeitlichen Abstimmung der Ansteuerung, die Pedallage bzw. die Pedalbetätigung jeweils auf der rechten und linken Seite erfasst werden. Hierzu existieren verschiedene Kraft- und Drehmomentsensoren 130, die diese Größen erfassen können. Vorteilhafterweise wird diese Pedalbetätigung zeitaufgelöst erfasst, um die zukünftige Pedalbetätigung ableiten zu können.

Die Erkennung des Hindernisse und/oder dessen Umfahrung kann dem Fahrer auf einem geeigneten Display 150 angezeigt werden. Darüber hinaus kann dem Fahrer auch angezeigt werden, falls die Vorrichtung 100 zur Erkenntnis gelangt, dass keine Umfahrung des Hindernisses möglich ist. Hierbei kann über das Display 150 eine Warnung angezeigt werden. Alternativ oder zusätzlich kann auch eine akustische oder optische Warnung erfolgen, beispielsweise durch die Ansteuerung des Motors 140 in Form eines Vibrationsmodus. Darüber hinaus ist auch möglich, dass die Vorrichtung 100 durch die Ansteuerung einer dafür geeigneten (automatischen) Bremsanlage 160 einen Bremsvorgang einleitet, der insbesondere auf das Hindernis bzw. dessen Lage abgestimmt ist. Auch in diesem Fall kann das vom Motor 140 erzeugte Motorantriebsdrehmoment zumindest reduziert, wenn nicht sogar gänzlich unterbunden werden.

Anhand des Flussdiagramm der Figur 2 wird ein erfindungsgemäßes Verfahren beschrieben, welches beispielsweise in der Vorrichtung 100 der Figur 1 ablaufen kann. Nach dem Start wird in einem ersten Schritt wenigstens eine fahrdynamische Größe erfasst, die die Fahrt des Fahrrads auf der Fahrbahn charakterisiert. Dies kann beispielsweise der Lenkwinkel, die Geschwindigkeit, die Beschleunigung, das Antriebsmoment (Fahrerdrehmoment und/oder Motordrehmoment) oder eine ähnliche Sensorsorgröße sein. Optional kann in diesem Schritt 200 auch die Pedallage bzw. die Pedalbetätigung, insbesondere zeitaufgelöst, erfasst werden. Im nächsten Schritt 210 werden die Daten einer Umfeldsensorik erfasst, die den Bereich auf der Fahrbahn abdecken, auf dem sich das Fahrrad voraussichtlich bewegen wird. Aus diesen Daten sowie der wenigstens einen fahrdynamischen Größe wird in Schritt 220 ermittelt, ob ein Hindernis vor dem Fahrrad vorliegt, welches die Weiterfahrt behindert. Wird kein derartiges Hindernis erkannt, kann das Verfahren erneut mit Schritt 200 durchlaufen oder beendet werden. Nach der Erkennung eines Hindernisses im unveränderten Fahrverlauf wird in Schritt 230 ermittelt, inwieweit ein Ausweichmanöver möglich ist, mit dem eine Umfahrung des Hindernisses auf der rechten oder linken Seite möglich ist. Auch hier kann die wenigstens eine fahrdynamische Größe herangezogen werden, um das Ausweichmanöver zu ermitteln. Wird erkannt, dass ein derartiges Ausweichmanöver nicht möglich ist, kann das Verfahren beendet werden. Alternativ wird der Fahrer im Schritt 250 gewarnt, z.B. optisch und/oder akustisch. Alternativ kann im Schritt 250 auch eine Bremsanlage angesteuert werden, um das Fahrrad rechtzeitig vor dem Hindernis zum Stehen zu bringen. Die entsprechende Steuerung kann ebenfalls in Abhängigkeit der erfassten fahrdynamischen Größe erfolgen. Weiterhin alternativ kann der Motor in einen Vibrationsmodus versetzt werden, der beispielsweise über den Rahmen eine haptische Rückmeldung und Warnung an den Fahrer vermittelt.

Wird in Schritt 230 jedoch erkannt, dass ein Ausweichmanöver möglich ist, wird der Motor derart angesteuert, dass die Unterstützung durch den Motor den Fahrer auf die ermittelte Ausweichstrecke zwingt oder zumindest leitet. Dies geschieht durch eine Reduzierung des unterstützenden Motordrehmoments bei der Betätigung der entsprechenden Pedalseite, so dass der Fahrer diese Reduktion durch eigene Körperkraft bzw. durch Körpermaße kompensiert. Durch diese Kompensation verkippt bzw. neigt sich das Fahrrad auf die Seite, auf der das Ausweichmanöver und somit die Umfahrung ausgerichtet ist. Optional kann auch vorgesehen sein, dass bei der Ansteuerung des Motors, bzw. der Reduzierung des Antriebsdrehmoments durch den Motors auch die Pedallage bzw. Pedalbetätigung berücksichtig wird, um die Ansteuerung zeitlich auf die voraussichtliche Betätigung der Pedale abzustimmen. Anschließend wird das Verfahren beendet oder erneut gestartet.

## Patentansprüche

1. Verfahren zur Steuerung des Motors eines wenigstens teilweise elektrisch angetriebenen Fahrrad, wobei
• wenigstens eine fahrdynamische Größe des Betriebs des Fahrrads erfasst (200) wird, und
• mittels der Daten einer Umfeldsensorik (110) zumindest der in Fahrtrichtung des Fahrrads vorausliegende Bereich erfasst (210) wird, und
• ein Hindernis in Abhängigkeit der Daten der Umfeldsensorik (110) und der wenigstens einen fahrdynamischen Größe erkannt (220) wird, und
• in Abhängigkeit der Erkennung des Hindernisses und der wenigstens einen fahrdynamischen Größe der Motor (130) angesteuert (240) wird,
**dadurch gekennzeichnet, dass**
• in Abhängigkeit von der wenigstens einen fahrdynamischen Größe und dem erkannten Hindernis ein Ausweichmanöver um das Hindernis ermittelt (230) wird,
wobei bei Erkennung eines möglichen Ausweichmanövers in Abhängigkeit des ermittelten Ausweichmanövers die Unterstützung durch den Motor (130) bei Betätigung der entsprechenden Pedalseite auf der Seite der Umfahrung des Ausweichmanövers derart reduziert wird, dass eine Kompensation der Reduktion durch den Fahrer eingeleitet wird und das Fahrrad durch die Kompensation auf die Seite der Umfahrung des Ausweichmanövers um das Hindernis herum verkippt.

2. Verfahren nach Anspruch 1, **dadurch gekennzeichnet, dass** die Betätigung der Pedalen erfasst (200) wird und die Ansteuerung (240) des Motors zusätzlich in Abhängigkeit der erfassten Pedalbetätigung erfolgt.

3. Verfahren nach Anspruch 2, **dadurch gekennzeichnet, dass** die Ansteuerung (240) des Motors (130) derart erfolgt, dass das Motordrehmoment des Motors bei der Betätigung der Pedale auf der Seite des Ausweichmanövers reduziert wird, insbesondere auf null.

4. Verfahren nach einem der Ansprüche 1 bis 3, **dadurch gekennzeichnet, dass** bei Erkennung (230), dass ein Ausweichmanöver um das Hindernis herum nicht möglich ist, der Fahrer gewarnt (250) wird und/oder ein Bremsvorgang (250) eingeleitet wird.

5. Verfahren nach Anspruch 4, **dadurch gekennzeichnet, dass** als Warnung für den Fahrer der Motor (130) derart angesteuert (250) wird, dass er vibriert, insbesondere in der Form, dass die Vibrationen auf den Rahmen übertragen werden.

6. Vorrichtung zur Steuerung des Motors eines wenigstens teilweise elektrisch angetriebenen Fahrrad, insbesondere nach einem der Verfahren der Ansprüche 1 bis 5, wobei die Vorrichtung ein Steuergerät (100) aufweist, welches
• wenigstens eine fahrdynamische Größe des Betriebs des Fahrrads erfasst, und
• mittels der Daten einer Umfeldsensorik (110) zumindest den in Fahrtrichtung des Fahrrads vorausliegende Bereich erfasst, und
• ein Hindernis in Abhängigkeit der Daten der Umfeldsensorik (110) und der wenigstens einen fahrdynamischen Größe erkennt, und
• in Abhängigkeit der Erkennung des Hindernisses und der wenigstens einen fahrdynamischen Größe den Motor (130) ansteuert,
**dadurch gekennzeichnet, dass** das Steuergerät
• in Abhängigkeit von der wenigstens einen fahrdynamischen Größe und dem erkannten Hindernis ein Ausweichmanöver um das Hindernis ermittelt,
wobei bei Erkennung eines möglichen Ausweichmanövers in Abhängigkeit des ermittelten Ausweichmanövers die Unterstützung durch den Motor (130) bei Betätigung der entsprechenden Pedalseite auf der Seite der Umfahrung des Ausweichmanövers derart reduziert wird, dass der eine Kompensation der Reduktion durch den Fahrer eingeleitet wird und das Fahrrad durch die Kompensation auf die Seite der Umfahrung des Ausweichmanövers um das Hindernis herum verkippt.

7. Vorrichtung nach Anspruch 6, **dadurch gekennzeichnet, dass** das Steuergerät (100) die Betätigung der Pedalen erfasst und den Motor (130) zusätzlich in Abhängigkeit der erfassten Pedalbetätigung ansteuert.

8. Vorrichtung nach Anspruch 7, **dadurch gekennzeichnet, dass** das Steuergerät (100) den Motor (130) derart ansteuert, dass das Motordrehmoment des Motors (130) bei der Betätigung der Pedale auf der Seite des Ausweichmanövers reduziert wird, insbesondere auf null.

9. Vorrichtung nach einem der Ansprüche 6 bis 8, **dadurch gekennzeichnet, dass** das Steuergerät (100) bei Erkennung, dass ein Ausweichmanöver um das Hindernis herum nicht möglich ist, den Fahrer warnt und/oder ein Bremssystem (150) derart ansteuert, dass ein Bremsvorgang eingeleitet wird.

10. Vorrichtung nach Anspruch 9, **dadurch gekennzeichnet, dass** das Steuergerät (100) als Warnung für den Fahrer den Motor (130) derart angesteuert wird, dass er vibriert, insbesondere in der Form, dass die Vibrationen auf den Rahmen übertragen werden.

11. Fahrrad mit einem Motor und einer Vorrichtung nach einem der Ansprüche 6 bis 10, welche ein Verfahren nach einem der Ansprüche 1 bis 5 ausführt.

## Claims

1. Method for controlling the motor of an at least partly electrically driven bicycle, wherein
• at least one driving dynamics variable of the operation of the bicycle is recorded (200), and
• at least the region ahead in the direction of travel of the bicycle is recorded (210) by way of the data from a surroundings sensor system (110), and
• an obstacle is detected (220) depending on the data from the surroundings sensor system (110) and the at least one driving dynamics variable, and
• the motor (130) is driven (240) depending on the detection of the obstacle and the at least one driving dynamics variable,
**characterized in that**
• an evasion manoeuvre around the obstacle is determined (230) depending on the at least one driving dynamics variable and the detected obstacle, wherein, upon detection of a possible evasion manoeuvre, depending on the determined evasion manoeuvre, the support from the motor (130), upon actuation of the corresponding pedal side on the side on which the evasion manoeuvre is performed, is reduced such that a compensation of the reduction is initiated by the driver and the bicycle tilts around the obstacle by virtue of the compensation on the side on which the evasion manoeuvre is performed.

2. Method according to Claim 1, **characterized in that** the actuation of the pedals is recorded (200) and the motor is additionally driven (240) depending on the recorded pedal actuation.

3. Method according to Claim 2, **characterized in that** the motor (130) is driven (240) such that the motor torque of the motor is reduced, in particular to zero, upon actuation of the pedals on the side of the evasion manoeuvre.

4. Method according to one of Claims 1 to 3, **characterized in that**, upon detecting (230) that an evasion manoeuvre around the obstacle is not possible, the driver is warned (250) and/or a braking procedure (250) is initiated.

5. Method according to Claim 4, **characterized in that**, as a warning for the driver, the motor (130) is driven (250) such that it vibrates, in particular such that the vibrations are transmitted to the frame.

6. Device for controlling the motor of an at least partly electrically driven bicycle, in particular according to one of the methods of Claims 1 to 5, wherein the device has a controller (100) that
• records at least one driving dynamics variable of the operation of the bicycle, and
• records at least the region ahead in the direction of travel of the bicycle by way of the data from a surroundings sensor system (110), and
• detects an obstacle depending on the data from the surroundings sensor system (110) and the at least one driving dynamics variable, and
• drives the motor (130) depending on the detection of the obstacle and the at least one driving dynamics variable,
**characterized in that** the controller
• determines an evasion manoeuvre around the obstacle depending on the at least one driving dynamics variable and the detected obstacle,
wherein, upon detection of a possible evasion manoeuvre, depending on the determined evasion manoeuvre, the support from the motor (130), upon actuation of the corresponding pedal side on the side on which the evasion manoeuvre is performed, is reduced such that a compensation of the reduction is initiated by the driver and the bicycle tilts around the obstacle by virtue of the compensation on the side on which the evasion manoeuvre is performed.

7. Device according to Claim 6, **characterized in that** the controller (100) records the actuation of the pedals and additionally drives the motor (130) depending on the recorded pedal actuation.

8. Device according to Claim 7, **characterized in that** the controller (100) drives the motor (130) such that the motor torque of the motor (130) is reduced, in particular to zero, upon actuation of the pedals on the side of the evasion manoeuvre.

9. Device according to one of Claims 6 to 8, **characterized in that** the controller (100), upon detecting that an evasion manoeuvre around the obstacle is not possible, warns the driver and/or drives a brake system (150) such that a braking procedure is initiated.

10. Device according to Claim 9, **characterized in that** the controller (100), as a warning for the driver, drives the motor (130) such that it vibrates, in particular such that the vibrations are transmitted to the frame.

11. Bicycle having a motor and a device according to one of Claims 6 to 10 that performs a method according to one of Claims 1 to 5.

## Revendications

1. Procédé de commande du moteur d'une bicyclette mue au moins en partie électriquement, dans lequel
• on détecte (200) au moins une grandeur dynamique de roulage du fonctionnement de la bicyclette, et
• on détecte (210) au moyen des données de capteurs d'environnement (110) au moins la zone située en avant dans la direction de roulage de la bicyclette, et
• on détecte (220) un obstacle en fonction des données des capteurs d'environnement (110) et de ladite au moins une grandeur dynamique de roulage, et
• on commande (240) le moteur (130) en fonction de la détection de l'obstacle et de ladite au moins une grandeur dynamique de roulage,
**caractérisé en ce que**
• on détermine (230) une manœuvre d'évitement autour de l'obstacle en fonction de ladite au moins une grandeur dynamique de roulage et de l'obstacle détecté,
dans lequel, lors de l'identification d'une manœuvre d'évitement possible en fonction de la manœuvre d'évitement déterminée, on réduit l'assistance par le moteur (130) par actionnement du côté des pédales correspondant du côté de contournement de la manœuvre d'évitement, de telle manière qu'une compensation de la réduction soit opérée par le conducteur et que la bicyclette s'incline du fait de la compensation du côté de contournement de la manœuvre d'évitement autour de l'obstacle.

2. Procédé selon la revendication 1, **caractérisé en ce que** l'on détecte (200) l'actionnement des pédales et on opère la commande (240) du moteur en outre en fonction de l'actionnement des pédales détecté.

3. Procédé selon la revendication 2, **caractérisé en ce que** l'on opère la commande (240) du moteur (130) de telle manière que le couple moteur du moteur soit réduit, en particulier à zéro, lors de l'actionnement des pédales du côté de la manœuvre d'évitement.

4. Procédé selon l'une quelconque des revendications 1 à 3, **caractérisé en ce que**, en cas de reconnaissance (230) qu'une manœuvre d'évitement autour de l'obstacle n'est pas possible, le conducteur est averti (250) et/ou une opération de freinage (250) est effectuée.

5. Procédé selon la revendication 4, **caractérisé en ce qu'**à titre d'avertissement pour le conducteur, le moteur (130) est commandé (250) de telle manière qu'il vibre, en particulier de telle manière que les vibrations soient transmises au cadre.

6. Dispositif de commande du moteur d'une bicyclette mue au moins en partie électriquement, en particulier selon un des procédés des revendications 1 à 5, dans lequel le dispositif présente un appareil de commande (100), qui
• détecte au moins une grandeur dynamique de roulage du fonctionnement de la bicyclette, et
• détecte au moyen des données de capteurs d'environnement (110) au moins la zone située en avant dans la direction de roulage de la bicyclette, et
• détecte un obstacle en fonction des données des capteurs d'environnement (110) et de ladite au moins une grandeur dynamique de roulage, et
• commande le moteur (130) en fonction de la détection de l'obstacle et de ladite au moins une grandeur dynamique de roulage,
**caractérisé en ce que** l'appareil de commande
• détermine en fonction de ladite au moins une grandeur dynamique de roulage et de l'obstacle détecté une manœuvre d'évitement autour de l'obstacle,
dans lequel, en cas de détection d'une manœuvre d'évitement possible en fonction de la manœuvre d'évitement déterminée, réduit l'assistance par le moteur (130) par actionnement du côté des pédales correspondant du côté de contournement de la manœuvre d'évitement, de telle manière qu'une compensation de la réduction soit appliquée par le conducteur et que la bicyclette s'incline du fait de la compensation du côté de contournement de la manœuvre d'évitement autour de l'obstacle.

7. Dispositif selon la revendication 6, **caractérisé en ce que** l'appareil de commande (100) détecte l'actionnement des pédales et commande le moteur (130) en outre en fonction de l'actionnement des pédales détecté.

8. Dispositif selon la revendication 7, **caractérisé en ce que** l'appareil de commande (100) commande le moteur (130) de telle manière que le couple moteur du moteur (130) soit réduit, en particulier à zéro, lors de l'actionnement des pédales du côté de la manœuvre d'évitement.

9. Dispositif selon l'une quelconque des revendications 6 à 8, **caractérisé en ce que**, en cas de reconnaissance qu'une manœuvre d'évitement autour de l'obstacle n'est pas possible, l'appareil de commande (100) avertit le conducteur et/ou commande un système de freinage (150), de telle manière qu'une opération de freinage soit effectuée.

10. Dispositif selon la revendication 9, **caractérisé en ce qu'**à titre d'avertissement pour le conducteur, l'appareil de commande (100) commande le moteur (130) de telle manière qu'il vibre, en particulier de telle manière que les vibrations soient transmises au cadre.

11. Bicyclette avec un moteur et un dispositif selon l'une quelconque des revendications 6 à 10, qui exécute un procédé selon l'une quelconque des revendications 1 à 5.
